(19) Europäisches Patentamt
European Patent Office
Office européen des brevets

(11) Veröffentlichungsnummer: **0 253 773 B1**

# (12) EUROPÄISCHE PATENTSCHRIFT

(45) Veröffentlichungstag der Patentschrift: **26.05.93**

(51) Int. Cl.$^5$: **C08K 5/13**, C09K 15/08

(21) Anmeldenummer: **87810392.8**

(22) Anmeldetag: **13.07.87**

Die Akte enthält technische Angaben, die nach dem Eingang der Anmeldung eingereicht wurden und die nicht in dieser Patentschrift enthalten sind.

## (54) Stabilisiertes synthetisches Polymer.

(30) Priorität: **17.07.86 CH 2868/86**

(43) Veröffentlichungstag der Anmeldung:
**20.01.88 Patentblatt 88/03**

(45) Bekanntmachung des Hinweises auf die Patenterteilung:
**26.05.93 Patentblatt 93/21**

(84) Benannte Vertragsstaaten:
**BE DE FR GB IT NL**

(56) Entgegenhaltungen:
**EP-A- 0 081 457**

**J. SOC. CHEM. IND., Supplementary Issue no. 1, 1950; S.R. FINN et al., Seiten 3-7&NUM;**

(73) Patentinhaber: **CIBA-GEIGY AG**
**Klybeckstrasse 141**
**CH-4002 Basel(CH)**

(72) Erfinder: **Dubs, Paul, Dr.**
**Route des Pralettes 25**
**CH-1723 Marly(CH)**
Erfinder: **Pitteloud, Rita, Dr.**
**av. du Général-Guisan 44**
**CH-1700 Fribourg(CH)**

EP 0 253 773 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein synthetisches Polymer, welches mit Bis[2,4,6-trimethyl-3-hydroxyphenyl]methan stabilisiert ist, sowie die Verwendung dieser Verbindung zum Stabilisieren von synthetischen Polymeren gegen thermischen, oxidativen und/oder aktinischen Abbau.

Die Herstellung von Bis[2,4,6-trimethyl-3-hydroxyphenyl]methan ist bereits 1950 von S.R. Finn und J.W.G. Musty in "J. Soc. Chem. Ind. Supplementary Issue, No. 1, $S_3$" beschrieben worden. In den US-A-4 507 420 und US-A-3 632 553 wird die Verwendung von Bis-phenolen als Stabilisatoren für organisches Material beschrieben.

Es wurde nun gefunden, dass Bis[2,4,6-trimethyl-3-hydroxyphenyl]methan als Stabilisator für synthetische Polymere überraschenderweise besonders vorteilhaft ist.

Gegenstand der vorliegenden Erfindung ist daher eine Zusammensetzung enthaltend ein gegen oxidativen, thermischen und/oder aktinischen Abbau empfindliches synthetisches Polymer und die Verbindung der Formel I

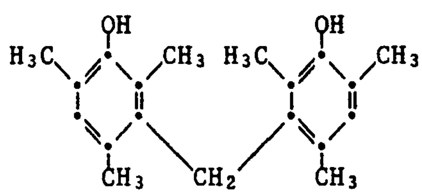

(I).

Bei dem synthetischen Polymer handelt es sich beispielsweise um:

1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.

3a. Kohlenwasserstoffharze (z.B. $C_5-C_9$) inklusive hydrierte Modifikationen davon (z.B. Klebrigmacherharze).

4. Polystyrol, Poly-(p-methylstyrol), Poly-($\alpha$-methylstyrol).
5. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
6. Pfropfcopolymere von Styrol oder $\alpha$-Methylstyrol, wie z.B. Styrol auf Polybutadien, Styrol auf Polybutadien-Styrol- oder Polybutadien-Acrylnitril-Coopolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid

auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA-, oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von $\alpha,\beta$-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten; Polyacetale, die mit termoplastischen Polyurethanen, Acrylaten oder MBS modifiziert sind.

13. Polyphenylenoxide und -sulfide und deren Mischungen mit Styrolpolymeren oder Polyamiden.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen-isophthalamid. Block-Copolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

29. Wässrige Emulsionen synthetischer Kautschuke, wie z.B. Latices von carboxylierten Styrol-Butadien-Copolymeren.

Von Interesse sind synthetische Polymere, bevorzugt Elastomere, insbesondere die folgenden Materialien:

a) Polydiene, wie beispielsweise Polybutadien, Polyisopren oder Polychloropren; Blockpolymere, wie beispielsweise Styrol-Butadien-Styrol, Styrol-Isopren-Styrol oder Acrylnitril-Butadien-Copolymere.

b) Copolymere von Mono- und Diolefinen untereinander oder mit anderen Vinylmonomeren, wie z.B. Ethylen-Alkylacrylat-Copolymere, Ethylen-Alkylmethacrylat-Copolymere, Ethylen-Vinylacetat-Copolymere sowie Terpolymere von Ethylen mit Propylen und einem Dien, wie Hexadien, Dicyclopentadien oder Ethylidennorbornen.

c) Halogenhaltige Polymere, wie z.B. Polychloropren, Chlorkautschuk, chloriertes oder chlorsulfoniertes Polyethylen, Epichlorhydrin-Homo- und -Copolymere, Chlortrifluorethylen-Copolymere, Polymere aus halogenhaltigen Vinylverbindungen, wie z.B. Polyvinylidenchlorid, Polyvinylidenfluorid; sowie deren Copolymere, wie Vinylchlorid-Vinylidenchlorid, Vinylchlorid-Vinylacetat oder Vinylidenchlorid-Vinylacetat.

d) Polyurethane, die sich von Polyethern, Polyestern und Polybutadien mit endständigen Hydroxylgruppen einerseits und aliphatischen oder aromatischen Polyisocyanaten andererseits ableiten sowie deren Vorprodukte.

e) Mischungen (Polyblends) der unter den Punkten a) bis e) aufgeführten Polymeren.

f) Wässrige Emulsionen synthetischer Kautschuke, wie z.B. Latices von carboxylierten Styrol-Butadien-Copolymeren.

Besonders bevorzugt ist Polystyrol sowie Co- und Terpolymere von Styrol, insbesondere carboxylierter Styrol-Butadien-Kautschuk-Latex und ebenfalls Acrylnitril-Butadien-Styrol-Terpolymere (ABS).

Von Interesse sind auch Polyolefine, bevorzugt die oben unter Punkt 1 angegebenen, insbesondere Polyethylen und Polypropylen sowie deren Copolymere.

Die erfindungsgemässen Zusammensetzungen enthalten zweckmässigerweise 0,01 bis 10 %, bevorzugt 0,05 bis 5 %, insbesondere 0,1 bis 2 % der Verbindung der Formel I, bezogen auf das Gesamtgewicht des zu stabilisierenden synthetischen Polymeren.

Neben der Verbindung der Formel I können die erfindungsgemässen Zusammensetzungen zusätzlich herkömmliche Additive enthalten, wie beispielsweise

<u>1. Antioxidantien</u>

<u>1.1. Alkylierte Monophenole</u>, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Dinonyl-4-methylphenol.

<u>1.2. Alkylierte Hydrochinone</u>, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

<u>1.3. Hydroxylierte Thiodiphenylether</u>, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).

<u>1.4. Alkyliden-Bisphenole</u>, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-

nonylphenol], 4,4′ – Methylen – bis – (2,6 – di – tert.butylphenol), 4,4′ – Methylen – bis – (6 – tert.butyl – 2 – methylphenol), 1,1 – Bis – (5 – tert. – butyl – 4 – hydroxy – 2 – methylphenyl) – butan, 2,6 – Bis – (3 – tert.butyl – 5 – methyl – 2 – hydroxybenzyl) – 4 – methylphenol, 1,1,3 – Tris – (5 – tert.butyl – 4 – hydroxy – 2 – methylphenyl) – butan, 1,1 – Bis – (5 – tert.butyl – 4 – hydroxy – 2 – methylphenyl) – 3 – n – dodecyl – mercaptobutan, Ethylenglycol – bis – [3,3 – bis – (3′ – tert.butyl – 4′ – hydroxyphenyl) – butyrat], Bis – (3 – tert.butyl – 4 – hydroxy – 5 – methylphenyl) – dicyclopentadien, Bis – [2 – (3′ – tert.butyl – 2′ – hydroxy – 5′ – methyl – benzyl) – 6 – tert.butyl – 4 – methyl – phenyl] – terephthalat.

1.5 Benzylverbindungen, z.B. 1,3,5 – Tris – (3,5 – di – tert.butyl – 4 – hydroxybenzyl) – 2,4,6 – trimethyl – benzol, Bis – (3,5 – di – tert.butyl – 4 – hydroxybenzyl) – sulfid, 3,5 – Di – tert.butyl – 4 – hydroxybenzyl – mercaptoessigsäure – isooctylester, Bis – (4 – tert.butyl – 3 – hydroxy – 2,6 – dimethylbenzyl)dithiol – te – rephthalat, 1,3,5 – Tris – (3,5 – di – tert.butyl – 4 – hydroxybenzyl) – isocyanurat, 1,3,5 – Tris – (4 – tert.butyl – 3 – hydroxy – 2,6 – dimethylbenzyl) – isocyanurat, 3,5 – Di – tert.butyl – 4 – hydroxybenzyl – phosphonsäure – dioctadecylester, Ca – Salz des 3,5 – Di – tert.butyl – 4 – hydroxybenzyl – phosphonsäure – monoethylester, 1,3,5 – Tris – (3,5 – dicyclohexyl – 4 – hydroxybenzyl)isocyanurat.

1.6. Acylaminophenole, z.B. 4 – Hydroxy – laurinsäureanilid, 4 – Hydroxy – stearinsäureanilid, 2,4 – Bis – (octylmercapto) – 6 – (3,5 – di – tert. – butyl – 4 – hydroxyanilino) – s – triazin, N – (3,5 – di – tert.butyl – 4 – hydroxyphenyl) – carbaminsäureoctylester.

1.7. Ester der β – (3,5 – Di – tert.butyl – 4 – hydroxyphenyl) – propionsäure mit ein – oder mehrwertigen Alkoholen, wie z.B. mit Methanol, Octadecanol, 1,6 – Hexandiol, Neopentylglycol, Thiodiethylenglycol, Diethylenglycol, Triethylenglycol, Pentaerythrit, Tris – (hydroxyethyl) – isocyanurat, N,N′ – Bis – (hydroxyethyl) – oxalsäurediamid.

1.8. Ester der β – (5 – tert.Butyl – 4 – hydroxy – 3 – methylphenyl) – propionsäure mit ein – oder mehr – wertigen Alkoholen, wie z.B. mit Methanol, Octadecanol, 1,6 – Hexandiol, Neopentylglycol, Thiodiethyl – englycol, Diethylenglycol, Triethylenglycol, Pentaerythrit, Tris – (hydroxy) – ethyl – isocyanurat, N,N′ – Bis – (hydroxyethyl) – oxalsäurediamid.

1.9. Ester der β – (3,5 – Dicyclohexyl – 4 – hydroxyphenyl) – propionsäure mit ein – oder mehrwertigen Alkoholen, wie z.B. mit Methanol, Octadecanol, 1,6 – Hexandiol, Neopentylglycol, Thiodiethylenglycol, Diethylenglycol, Triethylenglycol, Pentaerythrit, Tris – (hydroxy)ethyl – isocyanurat, N,N′ – Bis – (hydroxyethyl) – oxalsäurediamid.

1.10. Amide der β – (3,5 – Di – tert.butyl – 4 – hydroxyphenyl) – propionsäure, wie z.B. N,N′ – Bis – (3,5 – di – tert.butyl – 4 – hydroxyphenylpropionyl) – hexamethylendiamin, N,N′ – (3,5 – di – tert.butyl – 4 – hy – droxyphenylpropionyl) – trimethylendiamin, N,N′ – Bis – (3,5 – di – tert.butyl – 4 – hydroxyphenylpropio – nyl) – hydrazin.

2. UV – Absorber und Lichtschutzmittel

2.1. 2 – (2′ – Hydroxyphenyl) – benztriazole, wie z.B. das 5′ – Methyl – , 3′,5′ – Di – tert.butyl – , 5′ – tert.Butyl – , 5′ – (1,1,3,3 – Tetramethylbutyl) – , 5 – Chlor – 3′,5′ – di – tert.butyl – , 5 – Chlor – 3′ – tert.butyl – 5′ – methyl – , 3′ – sec.Butyl – 5′ – tert.butyl, 4′ – Octoxy – , 3′,5′ – Di – tert.amyl – , 3′,5′ – Bis – (α,α – dimethylbenzyl) – Derivat.

2.2. 2 – Hydroxybenzophenone, wie z.B. das 4 – Hydroxy – , 4 – Methoxy – , 4 – Octoxy – , 4 – Decyloxy – , 4 – Dodecyloxy – , 4 – Benzyloxy – , 4,2′,4′ – Trihydroxy – , 2′ – Hydroxy – 4,4′ – dimethoxy – Derivat.

2.3. Ester von gegebenenfalls substituierten Benzoesäuren, wie z.B. 4 – tert.Butyl – phenylsalicylat, Phe – nylsalicylat, Octylphenyl – salicylat, Dibenzoylresorcin, Bis – (4 – tert.butylbenzoyl) – resorcin, Benzoylre – sorcin, 3,5 – Di – tert.butyl – 4 – hydroxybenzoesäure – 2,4 – di – tert. – butylphenylester, 3,5 – Di – tert.butyl – 4 – hydroxybenzoesäurehexadecylester.

2.4. Acrylate, wie z.B. α – Cyan – β,β – diphenylacrylsäure – ethylester bzw. – isooctylester, α – Carbomethoxy – zimtsäuremethylester, α – Cyano – β – methyl – p – methoxy – zimtsäuremethylester bzw. – butylester, α – Carbomethoxy – p – methoxy – zimtsäure – methylester, N – (β – Carbomethoxy – β – cy – anovinyl) – 2 – methyl – indolin.

2.5. Nickelverbindungen, wie z.B. Nickelkomplexe des 2,2′ – Thio – bis – [4 – (1,1,3,3 – tetramethylbutyl) – phenols], wie der 1:1 – oder der 1:2 – Komplex, gegebenenfalls mit zusätzlichen Liganden, wie n – Butylamin, Triethanolamin oder N – Cyclohexyl – diethanolamin, Nickeldibutyldithiocarbamat, Nickelsalze von 4 – Hydroxy – 3,5 – di – tert.butylbenzylphosphonsäure – monoalkylestern, wie vom Methyl – oder Ethylester, Nickelkomplexe von Ketoximen, wie von 2 – Hydroxy – 4 – methyl – phenyl – un – decylketonoxim, Nickelkomplexe des 1 – Phenyl – 4 – lauroyl – 5 – hydroxypyrazols, gegebenenfalls mit zusätzlichen Liganden.

2.6. Sterisch gehinderte Amine, wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis-(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N′-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1′-(1,2-Ethandiyl)-bis-(3,3,5,5-tetramethyl-piperazinon).
2.7. Oxalsäurediamide, wie z.B. 4,4′-Di-octyloxy-oxanilid, 2,2′-Dioctyloxy-5,5′-di-tert.butyl-oxanilid,2,2′-Di-dodecyloxy-5,5′-di-tert.butyl-oxanilid, 2-Ethoxy-2′-ethyl-oxanilid, N,N′-Bis-(3-dimethylaminopropyl)-oxalamid, 2-Ethoxy-5-tert.butyl-2′-ethyloxanilid und dessen Gemisch mit 2-Ethoxy-2′-ethyl-5,4′-di-tert.butyl-oxanilid, Gemische von o- und p-Methoxy- sowie von o- und p-Ethoxy-disubstituierten Oxaniliden.
3. Metalldesaktivatoren, wie z.B. N,N′-Diphenyloxalsäurediamid, N-Salicylal-N′-salicyloylhydrazin, N,N′-Bis-(salicyloyl)-hydrazin, N,N′-Bis-(3,5-di-tert.butyl-4-hydroxyphenylpropionyl)-hydrazin, 3-Salicyloylamino-1,2,4-triazol, Bis-(benzyliden)-oxalsäuredihydrazid.
4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4′-biphenylen-diphosphonit, 3,9-Bis-(2,4-di-tert.butylphenoxy)-2,4,8,10-tetraoxa-3,9-diphosphaspiro[5.5]undecan.
5. Peroxidzerstörende Verbindungen, wie z.B. Ester der $\beta$-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-($\beta$-dodecylmercapto)-propionat.
6. Polyamidstabilisatoren, wie z.B. Kupfersalze in Kombination mit Jodiden und/oder Phosphorverbindungen und Salze des zweiwertigen Mangans.
7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.
8. Nukleierungsmittel, wie z.B. 4-tert.Butylbenzoesäure, Adipinsäure, Diphenylessigsäure.
9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.
10. Sonstige Zusätze, wie z.B. Weichmacher, Gleitmittel, Emulgatoren, Pigmente, Optische Aufheller, Flammschutzmittel, Antistatika, Treibmittel.

Die Einarbeitung der Verbindung der Formel I sowie gegebenenfalls weiterer Additive in das synthetische Polymere erfolgt nach bekannten Methoden, beispielsweise vor oder während der Formgebung oder auch durch Aufbringen der gelösten oder dispergierten Verbindungen auf das synthetische Polymere, gegebenenfalls unter nachträglichem Verdunsten des Lösungsmittels. Die Verbindung der Formel I kann auch in Form eines Masterbatches, der diese beispielsweise in einer Konzentration von 2,5 bis 25 Gew.-% enthält, den zu stabilisierenden Materialien zugesetzt werden.

Die Verbindung der Formel I kann auch vor oder während der Polymerisation oder vor der Vernetzung zugegeben werden.

Die so stabilisierten Materialien können in verschiedenster Form angewendet werden, z.B. als Folien, Fasern, Bändchen, Formmassen, Profile oder als Bindemittel für Lacke, Klebstoffe oder Kitte.

Die Verbindung der Formel I ist bekannt und kann in Analogie zu bekannten Verfahren, z.B. wie in dem schon erwähnten Artikel von S.R. Finn und J.W.G. Musty beschrieben, hergestellt werden.

Die Herstellung der Verbindung der Formel I erfolgt zweckmässigerweise durch Umsetzung von Mesitol mit Formaldehyd in Gegenwart eines Katalysators bei einer Temperatur von 0 bis 100 °C, bevorzugt 0 bis 60 °C, und in einem organischen Lösungsmittel, wie beispielsweise in einem Chlorkohlenwasserstoff, wie z.B. Methylenchlorid, Chloroform oder Dichlorethan, oder in einem Ether, wie z.B. Tetrahydrofuran, Dimethoxyethan oder Dioxan, oder in Toluol oder in einem Alkohol, wie z.B. Ethanol oder Isopropanol, oder in einem Glykol oder Glykolmonoalkyläther, oder auch in Wasser. Die Umsetzung kann gegebenenfalls in einer Stickstoffatmosphäre durchgeführt werden. Als geeignete Katalysatoren seien genannt: organische und anorganische, feste oder flüssige starke Säuren, wie z.B. Schwefelsäure, Phosphorsäure, Polyphosphorsäure, Salzsäure, p-Toluolsulfonsäure oder saure Ionenaustauscher, beispielsweise ®Nafion H. Der Katalysator kann gegebenenfalls auch in einer wässrigen Lösung vorliegen.

Das Molverhältnis Mesitol/Aldehyd beträgt zweckmässigerweise 2:1 bis 2:2,5 und das Molverhältnis Mesitol/Katalysator 1:0,5 bis 1:3. Die Reaktionszeit kann z.B. 2 bis 20 Stunden betragen.

Es ist vorteilhaft, die Säure (Katalysator) nach der Umsetzung durch Waschen mit einer geeigneten Base bzw. mit Wasser zu entferner.

Fällt das Produkt aus dem Reaktionsgemisch aus, wird es zweckmässigerweise abfiltriert und direkt weiterverarbeitet; ansonsten kann es nach der Entfernung des Lösungsmittels nach üblichen Methoden (z.B. Umkristallisation oder Chromatographie) aufgearbeitet werden.

Als mögliche Varianten des oben beschriebenen Herstellungsverfahrens seien z.B. genannt:

1.) Mesitol, Formaldehyd, Katalysator und Lösungsmittel können bei 0 °C gemischt und anschliessend bei einer Temperatur von 0 bis 100 °C, bevorzugt 0 bis 60 °C, bis zur erfolgten Umsetzung gerührt werden.

2.) Mesitol und Formaldehyd können in einem organischen Lösungsmittel vorgelegt werden und der Katalysator kann bei einer Temperatur von 0 bis 100 °C, bevorzugt 0 bis 60 °C, zugegeben werden.

3.) Mesitol und Katalysator können in einem Lösungsmittel vorgelegt werden und eine Formaldehydlösung kann bei 0 bis 100 °C, bevorzugt 0 bis 60 °C, zugegeben werden.

Als weiteres mögliches Herstellungsverfahren der Verbindung der Formel I sei die Umsetzung von Mesitol mit einer Verbindung der Formel II,

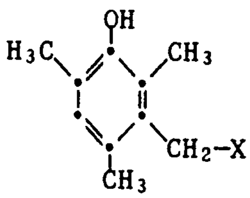

(II)

worin X z.B. Halogen, Tosyl, Mesyl, Hydroxy, Alkoxy oder Acyloxy ist, in Gegenwart eines Katalysators und in einem organischen Lösungsmittel genannt. Die Umsetzung kann z.B. bei einer Temperatur von 50 °C erfolgen. Als Katalysator kann zweckmässigerweise eine Brönsted- oder Lewis-Säure, wie z.B. Zinkchlorid, verwendet werden. Beispiele für geeignete Lösungsmittel sind dieselben, wie in dem vorangehenden Herstellungsverfahren aufgeführt. Die Reaktionszeit kann z.B. 5 Stunden betragen.

Das folgende Beispiel erläutert die Herstellung der Verbindung der Formel I:

Beispiel 1: Herstellung von Bis[2,4,6-trimethyl-3-hydroxphenyl]methan

In einer Stickstoffatmosphäre wird ein Gemisch von 100 g Mesitol, 30 ml Formalin (38%-ig) und 360 ml Methylenchlorid vorgelegt. Bei 0 °C werden 35 ml Schwefelsäure (85%-ig) zugetropft. Nach beendeter Zugabe wird das Gemisch 15 Stunden unter Rückfluss gerührt. Dann wird das Reaktionsgemisch abgekühlt und mit 25%-iger wässriger Ammoniaklösung neutralisiert. Anschliessend wird das Lösungsmittel abdestilliert. Der Rückstand wird mit 180 ml Methanol 30 Minuten unter Rückfluss erhitzt und anschliessend heiss filtriert. Beim Abkühlen des Filtrates fällt das Produkt aus.

Der Schmelzpunkt beträgt 188-189 °C.

| Elementaranalyse | | |
|---|---|---|
| Berechnet: | C 80,1 %; | H 8,52 % |
| Gefunden : | C 80,12 %; | H 8,49 % |

Die folgenden Beispiele erläutern die Erfindung weiter. Alle Prozentangaben beziehen sich auf das Gewicht, soweit nicht anders angegeben.

Beispiel 2: Stabilisierung von Acrylnitril-Butadien-Styrol-Terpolymeren.

1000 Teile unstabilisiertes ABS-Pulver (Polybutadiengehalt ~ 25 %) werden mit 100 Teilen Cyclohexan, welche 2,5 Teile Bis[2,4,6-trimethyl-3-hydroxyphenyl]methan als Stabilisator enthalten, gründlich gemischt. Das Lösungsmittel wird im Vakuum bei 40 °C/$N_2$ entfernt.

Das getrocknete Gemisch wird anschliessend in einem Trockenmischer mit 20 Teilen Titandioxid (Rutil) und 10 Teilen Gleitmittel (Ethylenbistearmid) versetzt. Das auf diese Weise stabilisierte Pulver wird auf einem Zweiwalzenstuhl zu einem Walzfell verarbeitet.

Bedingungen: Vordere Walze: 175 ° C/16 Umdrehungen pro Minute
Hintere Walze: 180 ° C/17 Umdrehungen pro Minute

Das Walzfell wird in einer Laborpresse bei 180 ° C in 5 Minuten zu einer Platte von 1 mm Dicket verpresst.

Als Prüflinge werden Plattenabschnitte von 20x50 $mm^2$ ausgestanzt.

Die Prüflinge werden in einem Belichtungsgerät (Xenotest 450 mit einer Schwarztafeltemperatur von (45±1) ° C) 24 Stunden belichtet und anschliessend 400 Stunden einer Ofenalterung bei 80 ° C unterzogen. Als Mass für die Wirksamkeit der Stabilisierung wird der Yellowness Index gemäss ASTM D 1925 – 70 herangezogen. Die Ergebnisse sind in Tabelle 1 aufgeführt. Eine unstabilisierte Probe würde bei den oben angegebenen Prüfbedingungen bereits zu Beginn des Versuchs so stark vergilben, dass eine Angabe des "Yellowness – Indices" gemäss ASTM D 1925 – 70 nicht mehr möglich wäre.

Tabelle 1

| | "Yellowness-Index" |
|---|---|
| Anfangszustand | 14,3 |
| Nach 24 Stunden Belichtung | 7 |
| Nach 400 Stunden Ofenalterung bei 80°C | 24 |

Beispiel 3: Stabilisierung von carboxyliertem Styrol – Butadien – Kautschuk – Latex

Von Bis[2,4,6 – trimethyl – 3 – hydroxyphenyl]methan wird eine konzentrierte methanolische Lösung hergestellt und in einen carboxylierten Styrol – Butadien – Kautschuk – Latex eingerührt. Dann werden 5 g Latex in eine Petrischale mit einem Druchmesser von 6 cm gefüllt und im Trockenschrank bei 80 ° C getrocknet. Nach der Trocknung liegt 0,1 Teil der obengenannten Verbindung in 100 Teilen Styrol – Butadien – Kautschuk vor. Man erhält einen transparenten Film mit einer Schichtdicke von ca. 0,2 mm. Dieser Film wird in einen auf 135 ° C geheizten Umluftofen gehängt. Ein Mass für die Stabilisierung der Probe ist der Yellowness Index nach ASTM D 1925 – 70, der in regelmässigen Zeitabständen bestimmt wird. Die Ergebnisse sind in Tabelle 2 aufgeführt.

Tabelle 2

| Stabilisator | Yellowness Index nach Belastungszeit in Stunden | | | |
|---|---|---|---|---|
| | 0 | 24 | 72 | 135 |
| ohne | 3 | 96 | - | - |
| Bis[2,4,6-trimethyl-3-hydroxyphenyl]methan | 3 | 15 | 36 | 89 |

## Patentansprüche

1. Zusammensetzung enthaltend ein synthetisches Polymer und die Verbindung der Formel I

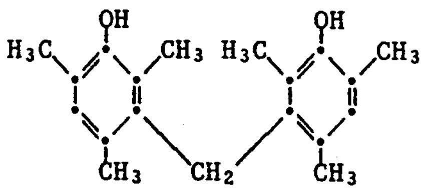

(I).

2. Zusammensetzung gemäss Anspruch 1, worin das synthetisches Polymer ein Elastomer ist.

3. Zusammensetzung gemäss Anspruch 1, worin das synthetische Polymer Polystyrol oder ein Co- oder Terpolymeres von Styrol ist.

4. Zusammensetzung gemäss Anspruch 1, worin das synthetische Polymer ein carboxylierter Styrol-Butadien-Kautschuk-Latex ist.

5. Zusammensetzung gemäss Anspruch 1, worin das synthetische Polymer ein Acrylnitril-Butadien-Styrol-Terpolymer ist.

6. Zusammensetzung gemäss Anspruch 1, worin das synthetische Polymer ein Polyolefin ist.

7. Verwendung der Verbindung der Formel I

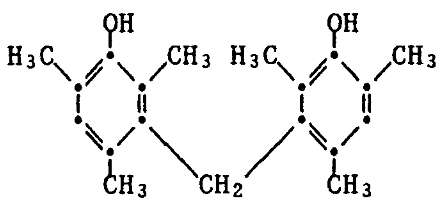

(I)

zum Stabilisieren von synthetischem Polymer gegen oxidativen, thermischen und/oder aktinischen Abbau.

## Claims

1. A composition containing a synthetic polymer and the compound of the formula I

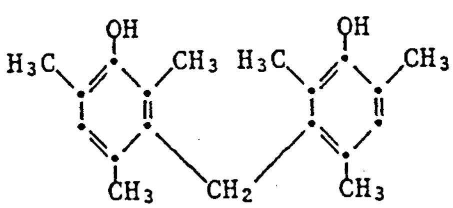

(I)

2. A composition according to claim 1, wherein the synthetic polymer is an elastomer.

3. A composition according to claim 1, wherein the synthetic polymer is polystyrene or a copolymer or terpolymer of styrene.

4. A composition according to claim 1, wherein the synthetic polymer is a carboxylated styrene/butadiene/rubber latex.

5. A composition according to claim 1, wherein the synthetic polymer is an acrylonitrile/butadiene/styrene terpolymer.

6. A composition according to claim 1, wherein the synthetic polymer is a polyolefin.

7. Use of the compound of the formula I

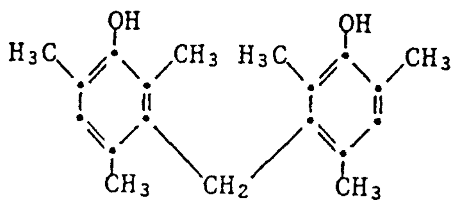

(I)

for stabilizing a synthetic polymer against oxidative, thermal and/or actinic degradation.

**Revendications**

1. Composition contenant un polymère synthétique et le composé répondant à la formule I

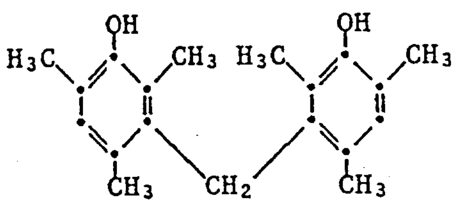

(I).

2. Composition selon la revendication 1, dans laquelle le polymère synthétique est un élastomère.

3. Composition selon la revendication 1, dans laquelle le polymère synthétique est le polystyrène ou un co – ou un terpolymère du styrène.

4. Composition selon la revendication 1, dans laquelle le polymère synthétique est un latex styrène – butadiène – caoutchouc carboxylé.

5. Composition selon la revendication 1, dans laquelle le polymère synthétique est un terpolymère acrylonitrile – butadiène – styrène.

6. Composition selon la revendication 1, dans laquelle le polymère synthétique est une polyoléfine.

7. Utilisation du composé répondant à la formule I

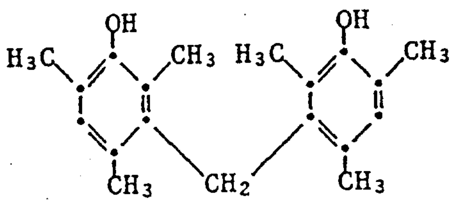

(I).

pour la stabilisation d'un polymère synthétique contre la dégradation oxydante, thermique et/ou actinique.